# FASCICULE DE BREVET EUROPEEN

(11) **EP 2 898 391 B1**
(45) Date de publication et mention de la délivrance du brevet: **23.10.2019**
(21) Numéro de dépôt: 13765357.2
(22) Date de dépôt: 19.09.2013
(51) Int. Cl.: G06F 3/00, G06F 3/01, G06F 3/03, G06F 3/0488

(54) **METHODE DE SELECTION DE MODE D'INTERACTIVITE**
VERFAHREN ZUR AUSWAHL EINES INTERAKTIVITÄTSMODUS
METHOD OF SELECTING INTERACTIVITY MODE

(30) Priorité: 19.09.2012 FR 1258803
(43) Date de publication de la demande: 29.07.2015
(73) Titulaire: Institut National de Sciences Appliquées, 35700 Rennes (FR)
(72) Inventeur: ANQUETIL, Eric, F-35520 Melesse (FR); ALMAKSOUR, Abdullah, F-35700 Rennes (FR); RICHARD, Grégoire, F-35000 Rennes (FR)
(74) Mandataire: Vidon Brevets & Stratégie
(86) Numéro de dépôt international: PCT/EP2013/069439
(87) Numéro de publication internationale: WO 2014/044740

(56) Documents cités:
- EP-A1- 2 426 584
- EP-A2- 2 040 156
- US-A1- 2008 111 710
- US-A1- 2009 251 425
- US-A1- 2010 257 447
- US-A1- 2011 060 986

## Description

### 1 DOMAINE DE L'INVENTION

L'invention se rapporte au domaine de l'interface entre utilisateur et un dispositif numérique de restitution d'informations. Plus particulièrement, l'invention se rapporte à l'interaction entre l'utilisateur et un dispositif numérique de restitution d'informations. De manière classique, un dispositif numérique de restitution d'informations au sens de l'invention peut se comprendre comme un ordinateur, un téléphone intelligent, une tablette numérique, un téléviseur.

### 2 SOLUTIONS DE L'ART ANTERIEUR

On connaît beaucoup de dispositifs numériques de restitution d'information. On connaît également beaucoup de techniques d'interactions entre ces dispositifs et les utilisateurs. Par exemple, pour les ordinateurs, le moyen le plus connu d'interaction est l'utilisation d'une souris et d'un clavier. Par l'intermédiaire d'une interface homme machine, l'utilisateur peut interagir avec les applications logicielles installées sur son ordinateur en déplaçant et en actionnant la souris ainsi qu'en utilisant les touches du clavier. L'usage du trio clavier/souris/écran est d'une telle banalité qu'il constitue la référence de l'outil d'interaction entre l'homme et la machine.

Cependant, le marché de l'ordinateur domestique a été bousculé par la commercialisation et le succès de terminaux de nouvelle génération comme les téléphones intelligents (« Smartphones ») et les tablettes numériques. Les utilisateurs ont massivement adopté ces terminaux, entrainant une redéfinition des usages de l'ensemble des autres terminaux. L'usage obligatoire de l'ordinateur est désormais limité à quelques tâches précises tandis que les Smartphones et les tablettes sont utilisés par tout à chacun pour de la consultation (de mail, de documents, etc.), pour les jeux et pour quelques tâches d'édition, qui sont il est vrai encore marginales.

En effet, l'un des problèmes posés par les tablettes numériques et les Smartphones est en fait lié à ce qui a fait leur succès : l'interface tactile. L'interface tactile a popularisé l'usage des smartphone et des tablettes : la simplicité d'usage, l'utilisation du bout des doigts, la simplification des interfaces et des applications ont largement contribué au succès de ces terminaux.

Mais l'interface tactile avec la machine pose intrinsèquement le problème de limitation de l'interaction. En effet, avec un clavier et une souris, les possibilités d'interaction avec la machine sont nombreuses. Plus particulièrement, les possibilités d'interaction avec les applications sont nombreuses : il y a par exemple le clic gauche de la souris, le clic droit, la molette, les combinaisons de touches au clavier, la mixité entre les combinaisons de touches au clavier et l'usage de la souris. Toutes ces possibilités d'interaction offrent des solutions aux utilisateurs pour faciliter ou accélérer les tâches ou les actions à accomplir. Par exemple, l'usage de copier/coller est simplifié par les raccourcis universels que sont « Ctrl+C » et « Ctrl+V ». L'usage de la molette de la souris permet de faire défiler l'écran d'édition de bas en haut et de haut en bas.

En revanche, l'utilisation de l'interface tactile est intrinsèquement limitée. Bien que des progrès aient été réalisés, notamment par l'utilisation de la technique dite du « multitouch », permettant à l'utilisateur d'utiliser deux doigts ou plus pour faire certaines actions, l'utilisation du doigt est limitée à quelques gestes : gauche, droite, haut, bas, rotation, sélection, etc. (Cela fait d'ailleurs partie de ce qui en a fait un succès).

Ceci s'explique de plusieurs manières : d'une part par ce que les spécialistes nomment la « prise directe » et la « prise indirecte » et d'autres part par la complexité de la mémorisation des gestes tactiles.

Pour ce qui est de la prise directe et de la prise indirecte, il s'agit de la manière dont il est possible d'interagir avec le terminal ou l'application. En prise directe, les mouvements ou les dessins réalisés par l'utilisateur servent à interagir avec le ou les éléments affichés à l'écran. Un exemple de prise directe est par exemple l'utilisation du doigt pour faire défiler un écran de droite à gauche ou de gauche à droite, comme cela se fait sur les Smartphones et les tablettes. Au contraire, en prise indirecte le dessin ou le mouvement réaliser par l'utilisateur sert à effectuer une commande (par exemple insérer un objet dans un document, ouvrir un document, etc.). Le document US 2008/0111710 A1 décrit un exemple d'interaction en prise indirecte, dans lequel un dessin, effectué au doigt sur un écran tactile par un utilisateur, est associé à une forme reconnue (typiquement un caractère alphanumérique). Ce document décrit également des mécanismes permettant à l'utilisateur de confirmer que la forme reconnue est celle attendue, ou au contraire de rejeter la forme reconnue si elle ne correspond pas à celle attendue. Ce mode d'utilisation est rarissime dans les terminaux grand public actuels.

La demande de brevet EP 2426584 propose une technique permettant de détecter une opération de changement de modes d'interaction. La demande de brevet US 2010257447 divulgue une méthode permettant de réaliser une interaction spéciale par geste avec un dispositif ayant un écran tactile. La demande de brevet US 2011060986 divulgue une méthode de contrôle d'affichage sur un écran tactile. Cependant, ces trois demandes de brevet ne divulguent pas de solution permettant un passage d'un mode à l'autre de manière conviviale et pratique.

De plus, le passage d'un mode à l'autre n'est pas aisé lorsque l'on dispose d'un écran tactile. Bien souvent, les développeurs proposent des astuces pour passer de l'un à l'autre, comme par exemple la présence d'un bouton physique sur le terminal ou la présence d'un bouton sur l'écran tactile. Pour passer d'un mode à l'autre, l'utilisateur doit toucher ce bouton supplémentaire sur le dispositif ou sur l'écran du dispositif, ce qui n'est ni convivial ni pratique. De plus, la plupart des dispositifs actuels tendent à la suppression des boutons physiques surnuméraires pour ne laisser subsister qu'un seul et unique bouton (marche/arrêt).

L'autre problématique de l'interface tactile tient à la nécessité de mémoriser un certain nombre de gestes et de formes. En effet, certains gestes sont d'une simplicité remarquable et ne nécessitent que peu d'effort de mémorisation de la part de l'utilisateur. En revanche, d'autres gestes sont nettement plus complexes à mémoriser, particulièrement quand le nombre total de gestes à mémoriser est important. On estime traditionnellement qu'au-delà d'une vingtaine de gestes, l'utilisateur standard n'est plus en mesure de mémoriser correctement les gestes permettant une interaction avec la machine, alors même que les moteurs de reconnaissance de forme (intégrés aux applications ou aux systèmes d'exploitation) peuvent aller bien au-delà. C'est pour cela que les premiers assistant personnels de type « Palm Pilot » ont eu un succès relativement mitigé au regard du succès des terminaux actuels. Il était en effet nécessaire, à l'époque, de mémoriser, par l'intermédiaire d'un tableau de correspondance, tous les gestes nécessaire à l'écriture des nombres et des lettres de l'alphabet ainsi que d'autres signes courants, ce qui représentait au bas mot une cinquantaine de gestes. Alternativement, cette problématique a été résolue par l'utilisation d'un clavier virtuel permettant à l'utilisateur de cliquer avec son doigt (ou un stylet adapté) à la place de tracer les lettres sur le clavier. Paradoxalement, alors qu'il existe de
nombreux moteurs de reconnaissance de forme, dont certains réellement performants, c'est le facteur humain qui limite l'utilisation de ces moteurs de reconnaissance de forme.

On comprend ici pourquoi les terminaux tactiles actuels sont limités : à trop vouloir simplifier l'usage, on a limité les possibilités, pourtant énormes, d'interaction avec la machine. Actuellement, les mêmes problèmes sont rencontrés pour ce qui est de l'interaction par l'intermédiaire de caméras stéréoscopiques, comme le très populaire kinect™ de microsoft™.

### 3 RESUME DE L'INVENTION

L'invention ne présente pas ces inconvénients de l'art antérieur. L'invention propose une méthode et un système permettant de ne pas limiter l'interaction entre l'utilisateur et la machine par l'intermédiaire d'une surface tactile, d'une caméra stéréoscopique, etc.

L'invention propose par exemple une méthode simple de passage de prise directe en prise indirecte. L'invention propose également une méthode simple d'apprentissage de formes par l'intermédiaire d'une surface tactile.

Plus particulièrement, l'invention se rapporte à un procédé de sélection, parmi au moins deux modes disponibles, d'un mode d'interaction entre un utilisateur et un dispositif numérique de restitution, le procédé étant tel que défini en revendication 1.

Selon une caractéristique particulière ledit terminal de restitution comprend une surface tactile et en ce que ledit au moins un membre est une main et ladite au moins une partie d'un membre est un doigt.

Selon une caractéristique particulière ledit terminal de restitution comprend caméra stéréoscopique et en ce que ledit au moins un membre est un bras et ladite au moins une partie d'un membre est une main.

Selon une caractéristique particulière ladite première valeur prédéterminée est égale à ladite deuxième valeur prédéterminée et en ce que ce ladite première valeur prédéterminée est égale à un.

L'invention se rapporte également à un dispositif numérique de restitution d'informations tel que défini en revendication 6.

Les différents modes de réalisation mentionnés ci-dessus sont combinables entre eux pour la mise en œuvre de l'invention.

Selon une implémentation préférée, les différentes étapes du procédé selon l'invention sont mises en œuvre par un logiciel ou programme d'ordinateur, ce logiciel comprenant des instructions logicielles destinées à être exécutées par un processeur de données d'un module relais selon l'invention et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente une illustration d'une application pour la mise ne œuvre de l'invention ;
- la figure 2 illustre le passage d'un mode de contrôle direct à un mode de contrôle indirect ;
- les figures 3, 4 et 5 illustrent le redimensionnement et la suppression d'un objet en mode de prise directe ;
- les figures 6, 7 et 8 illustrent la manipulation directe d'un objet pour le déplacer sur un document avec un doigt ;
- la figure 9 illustre l'interface d'apprentissage explicite ;
- la figures 10 illustre la manière dont un geste est saisit ;
- la figure 11 illustre la manière dont un geste est supprimé ;
- la figure 12 décrit les étapes mise en œuvre pour la reconnaissance d'un geste personnalisé ;
- la figure 13 illustre l'atténuation progressive de la donnée représentative de la forme reconnue.
- Les figures 14 et 15 illustrent le mécanisme de correction mis en œuvre pour permettre à l'utilisateur de modifier les gestes reconnus ;
- Les figures 16 à 18 illustrent la mémorisation de gestes complexes de la part de l'utilisateur.

### 5 DESCRIPTION DETAILLEE DE L'INVENTION

### 5.1 Présentation générale

Comme explicité préalablement, l'invention propose une méthode d'interaction avec une machine par l'intermédiaire de gestes, lesquels sont obtenus par l'intermédiaire d'une interface de captation de gestes de la machine. Cette interface peut être l'interface tactile d'une tablette numérique. Cette interface peut également être une caméra stéréoscopique.

L'invention réside dans la manière dont les gestes de l'utilisateur sont interprétés, dans la manière dont on interprète les gestes de l'utilisateur (pour faire en sorte que la machine s'habitue à l'utilisateur) et dans la manière dont l'utilisateur apprend les gestes attendus par la machine.

Une combinaison de ces trois nouvelles méthodes peut être mise en œuvre au sein d'une seule et même application ou au sein d'un système d'exploitation afin de fournir une nouvelle expérience attractive de l'interaction avec les nouveaux dispositifs de restitution numériques.

Cependant, chaque technique décrite peut être mise en œuvre indépendamment l'une de l'autre en fonction des circonstances et des problématiques à résoudre.

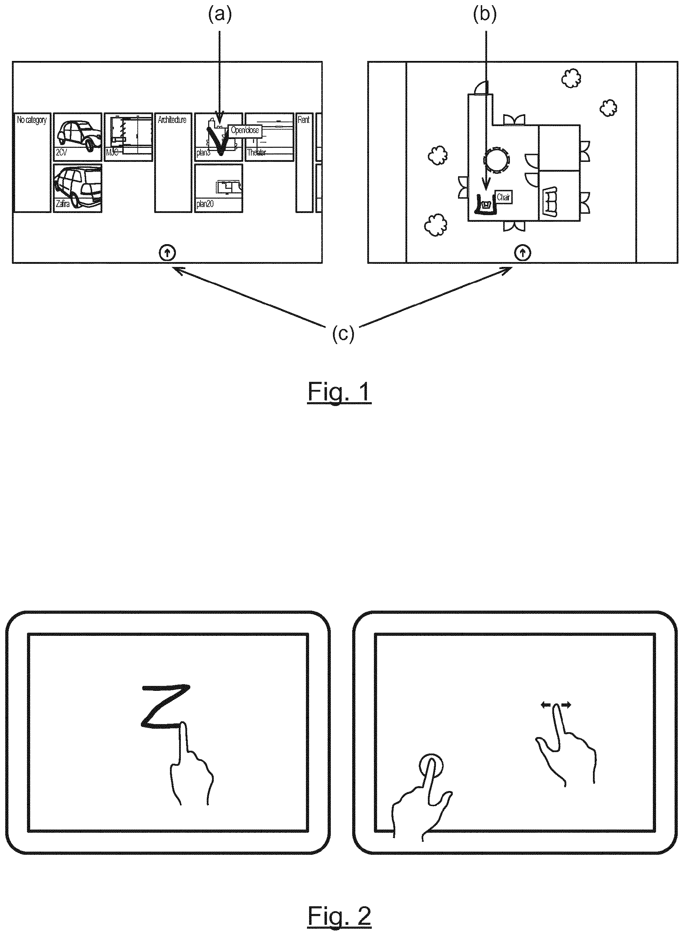

Pour illustrer la problématique, on prend l'exemple suivant, purement illustratif, décrit en relation avec la figure 1. Dans la figure 1, une application affiche une liste de documents que l'utilisateur peut faire défiler (figure 1 - gauche). Dans ce mode « liste » l'utilisateur peut classer les documents. Une fois classés, un document peut être ouvert dans un mode spécifique d'édition plein écran correspondant à la catégorie attribuée, comme dans (figure 1 - droite). Dans l'exemple de la figure 1, il s'agit d'un cas de la mise en place des meubles sur un plan de maison. Dans ce mode d'édition de documents, l'utilisateur peut insérer une grande variété de meubles et peut les organiser sur le plan.

À partir de cet exemple d'application, on identifie trois types de gestes qu'un utilisateur peut dessiner pour :
- effectuer une action (catégorisation, ouverture et fermeture d'un document (Fig. 1 - a)) ;
- insérer un objet dans un document (Fig. 1 - b) ;
- ou manipuler directement un objet inséré.

Le tableau suivant décrit les principes d'interaction pour chacun de ces types de gestes en termes : d'affichage de l'entrée de l'utilisateur en tant que trace lorsqu'il dessine un geste ; de retour visuel ; de stratégie d'exécution.

**Tableau 1**

| *Type de geste* | *Trace visuelle* | *Retour visuel* | *Exécution* |
|---|---|---|---|
| Commande | Oui | Nom de la commande | Retardée |
| Insertion | Oui | Nom de l'objet Insertion de l'objet | Immédiate |
| Manipulation | Non | Mise à jour continue de l'aspect de l'objet | Continue |

La mise en œuvre des deux premiers types de geste (commandes et insertions) repose sur l'utilisation d'un moteur de reconnaissance gestuel.

Compte tenu de la grande quantité de gestes qui pourraient être nécessaires dans le cadre d'une utilisation à l'échelle, une instance d'un moteur de reconnaissance spécifique est utilisé (et mis à jour en permanence) pour chaque catégorie de documents et/ou d'applications. Les gestes peuvent être dessinés différemment d'un utilisateur à l'autre, et les utilisateurs peuvent vouloir ajouter ou retirer des gestes durant l'utilisation de l'application (Sans avoir à définir a priori l'ensemble des gestes qui sera utilisé pour cette application).

Certains travaux connexes proposent des systèmes pour faciliter la personnalisation de geste, mais seulement pour la construction d'une application ou pour l'établissement d'une bibliothèque de gestes standard. Actuellement, aucun des systèmes existants ne permet aux utilisateurs finaux de personnaliser le moteur de reconnaissance des gestes.

En outre, dans une utilisation courante, l'utilisateur change progressivement la manière dont il effectue les gestes. Un utilisateur novice commence à dessiner soigneusement et lentement ses gestes, alors qu'il les fait de manière plus fluide quand il devient expert de l'utilisation des gestes.

Pour faire face à ces exigences, le système de reconnaissance doit évoluer au cours de son utilisation dans l'application.

Les inventeurs ont eu l'idée de proposer une mise en œuvre d'un moteur de reconnaissance évolutif, en fonctionnement et en apprentissage permanent permettant l'apprentissage de nouveaux gestes par l'apprentissage de quelques échantillons fournis par l'utilisateur. Pour ce faire, les inventeurs proposent des méthodes d'interaction entre l'utilisateur et le dispositif, sur la base d'un nombre de membres ou un nombre de parties de membres utilisés pour interagir. Concrètement, pour une surface tactile, les doigts sont utilisés. Pour une reconnaissance à base de caméra stéréoscopique, les bras et les mains sont utilisés pour faire des gestes.

L'invention ne porte pas sur le moteur de reconnaissance gestuel en tant que tel, mais sur la manière dont le moteur de reconnaissance gestuel doit être mis en œuvre (c'est-à-dire utilisé) pour que l'interaction avec l'utilisateur soit simple et intuitive et que l'utilisateur puisse utiliser un dispositif numérique de restitution de manière aisée. La mise en œuvre objet de l'invention est orientée sur trois axes distincts : le passage d'un mode de prise direct à un mode de prise indirect et vice versa ; l'apprentissage, par le dispositif, de gestes spécifiques à l'utilisateur ; l'apprentissage, par l'utilisateur, de gestes attendus par le dispositif.

### 5.2 Description de modes de réalisation

Les modes de réalisation présentés ci-après sont adaptés à un usage sur écran tactile en utilisant un ou plusieurs doigts. Ainsi, dans ces modes de réalisation, le membre utilisé est la main et la portion de membre utilisé est le doigt. On note par ailleurs que les méthodes décrites s'appliquent également au stylet lorsque l'utilisateur est pourvu d'un tel outil. Par ailleurs, dans ces modes de réalisation, uniquement deux modes d'interaction sont présentés : le mode direct et le mode indirect. Il est bien entendu qu'en fonction du mode de réalisation, plusieurs modes peuvent être envisagé, comme par exemple trois modes. Cependant, dans ce qui suit, on considère que deux modes sont disponibles. Par voie de conséquence, la première valeur prédéterminée a la valeur un et la deuxième valeur prédéterminée est égale à la première valeur prédéterminée. En résumé, dans ce mode de réalisation, on cherche à déterminer si l'utilisateur utilise un ou deux doigts.

### 5.2.1 Prise directe/Prise indirecte.

Dans ce premier mode de réalisation, l'invention propose une nouvelle mise en œuvre du passage de prise directe à la prise indirecte et vice versa. On rappelle que la prise directe consiste, selon l'invention, à désactiver la mise en œuvre du moteur de reconnaissance gestuel. Dans le mode « prise directe », les gestes dessinés par l'utilisateur ne sont pas interprétés par le moteur de reconnaissance gestuel, mais par un mécanisme plus simple et spécialisé de détection de mouvement. Dans le mode de prise indirecte, au contraire, le moteur de reconnaissance gestuel est utilisé pour interpréter et reconnaître les gestes de l'utilisateur et réaliser des commandes et/ou des actions correspondant à ces gestes.

En d'autres termes, lorsque le moteur de reconnaissance est activé, les dessins effectués par l'utilisateur sont interprétés pour réaliser des actions et/ou des commandes (on est en prise indirecte). Lorsque le moteur est désactivé, les gestes de l'utilisateur ne sont pas reconnus par lui (on est en prise directe, pour par exemple asservir via une fonction de transfert les mouvements au défilement de l'écran de droite à gauche, faire des rotations, etc.).

Dans l'exemple de réalisation présenté ici, les utilisateurs peuvent effectuer un geste n'importe où dans un document lors d'une action d'insertion d'un objet graphique ou d'un symbole, ou pour effectuer une action spécifique à l'application. De cette façon, l'insertion d'un objet dans un document ou la mise en œuvre d'actions est rapide. Toutefois, dans le cas de la manipulation d'objets graphiques sur les interfaces tactiles, *la manipulation directe*, comme la translation d'un objet en le faisant glisser avec un doigt, est plus naturelle pour l'utilisateur et doit donc être préférée.

On comprend qu'il n'est pas possible de permettre *simultanément* la manipulation d'un objet inséré (c'est-à-dire qu'on est en prise directe) et l'interprétation (la reconnaissance) de gestes pour permettre d'effectuer des actions (par exemple l'insertion d'un objet). Pour contourner cette limitation, les inventeurs ont défini une méthode de désactivation temporaire de la saisie de geste permettant la mise en œuvre d'un ensemble de techniques (par ailleurs connues) pour la manipulation directe d'objets graphiques.

### Changement de mode : passage du mode de prise directe au mode de prise indirecte

Comme explicité préalablement, un mode efficace de commutation entre le *le mode direct* et *le mode indirect* est un bouton : l'utilisateur appuie sur ce bouton pour passer d'un mode à l'autre. Les inventeurs proposent, à la place, un nouveau mécanisme, plus intuitif et moins perturbant.

Par ailleurs ce mécanisme est extrêmement simple : il consiste à prendre en compte le nombre de doigts posé sur l'écran : lorsqu'un seul doigt est posé, on est dans un premier mode. Lorsque deux doigts sont posés, on est dans un deuxième mode.

Par exemple, selon un premier mode de réalisation, lorsqu'un seul doigt est posé, on est en mode de prise indirecte et le moteur est utilisé pour interpréter les déplacements du doigt. Lorsque deux doigts sont posés, on est en mode de prise directe et le moteur n'est pas utilisé pour interpréter les déplacements du doigt.

Par exemple, selon un deuxième mode de réalisation, lorsqu'un seul doigt est posé, on est en mode de prise directe et le moteur n'est pas utilisé pour interpréter les déplacements du doigt. Lorsque deux doits sont posés, on est en mode de prise indirecte et le moteur est utilisé pour interpréter les déplacements du doigt.

En d'autres termes, la méthode consiste à :
- Obtenir le nombre de doigts utilisés pour effectuer le geste ; et
- lorsque ce nombre est supérieur à un, sélectionner le premier mode d'interaction parmi les deux modes disponibles ;
- lorsque ce nombre est égal à un, sélectionner le deuxième mode d'interaction parmi les deux modes disponibles.

Le choix entre le premier et le deuxième mode de réalisation n'est pas le seul possible. D'autre mode de réalisation peuvent être proposé. En réalité, l'invention réside dans l'interaction entre l'utilisateur et le dispositif par l'intermédiaire d'un élément supplémentaire, propre à l'utilisateur (ici un doigt supplémentaire) qui va ou non être utilisé pour passer d'un mode à l'autre.

Dans un mode de réalisation spécifique de l'invention, on tire avantage de la capacité des écrans dits « multitouch » pour compter le nombre de doigts posés sur l'écran et adapter le comportement de la couche applicative en conséquence pour permettre ou non l'interprétation des mouvements réalisés par l'utilisateur par le moteur de reconnaissance gestuel. Dans d'autres mode de réalisation, d'autres technologies que le « multitouch » sont utilisées pour réaliser ce comptage.

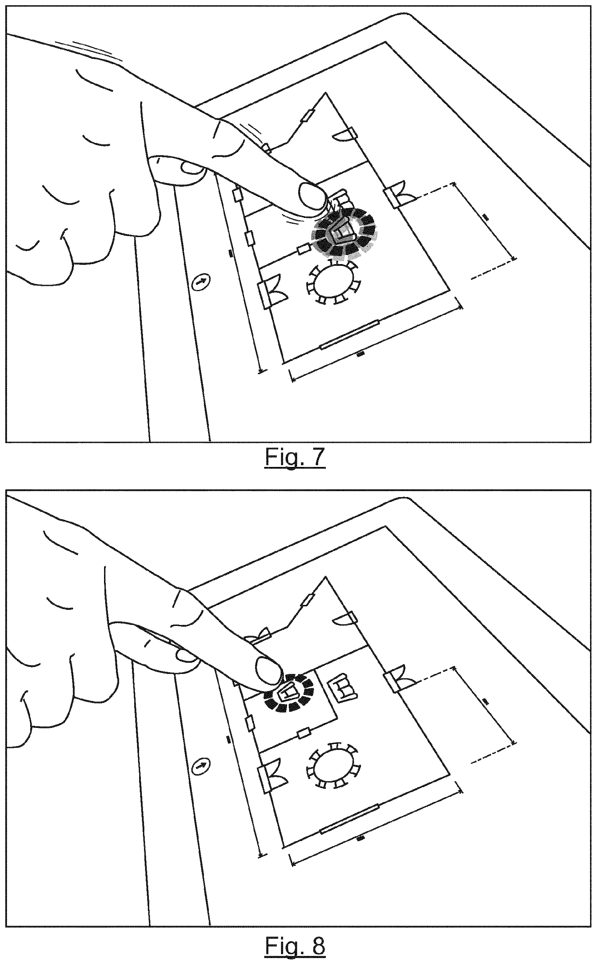

Dans un mode de réalisation présenté en relation avec les figures 2 à 8, toucher et maintenir un doigt supplémentaire sur l'écran tactile permet de passer en mode de prise directe (Fig. 2 à 4), et dans le même temps réaliser l'action associée à la prise directe en utilisant son ou ses deux doigts. Ceci à l'avantage de permettre à l'utilisateur de changer de mode en utilisant la main qui n'est pas utilisée pour produire les gestes (par exemple la main gauche pour un droitier, main droite pour un gaucher) n'importe où, de quelque côté que la main soit positionné par rapport au dispositif. L'autre main reste libre pour manipuler des objets ou effectuer une autre opération reposant sur le toucher que l'application peut offrir. Dans le mode de réalisation présenté en relation avec les figures précédentes, ces opérations sont relatives au défilement de liste (en mode liste) ou à la manipulation des objets graphiques dans un document.

Ainsi, le changement de mode, tout en étant explicite physiquement (associé au nombre de contacts de doigts ou d'identification du nombre de membres ou de parties de membres utilisées), peut apparaitre en réalité implicite pour l'utilisateur. Autrement dit : Il n'y a pas, du point de vue de l'utilisateur, deux phases distinctes à réaliser pour changer de mode et réaliser sa commande. Du point de vue de l'utilisateur, le ressenti est plutôt une simultanéité : les étapes de changement de mode et de réalisation de l'action sont en fait confondues.

Ainsi, du point du vue de l'utilisateur (et également du système, selon au moins un mode de réalisation), en changeant de mode, on se trouve déjà en position de réaliser l'action voulue et inversement en réalisant l'action voulue, on a opéré implicitement un changement de mode.

Le changement de mode implicite du point de vue de l'utilisateur représente un avantage par rapport aux méthodes antérieures puisqu'il est nettement plus simple à mettre en œuvre.

### Sélection et Translation d'objets

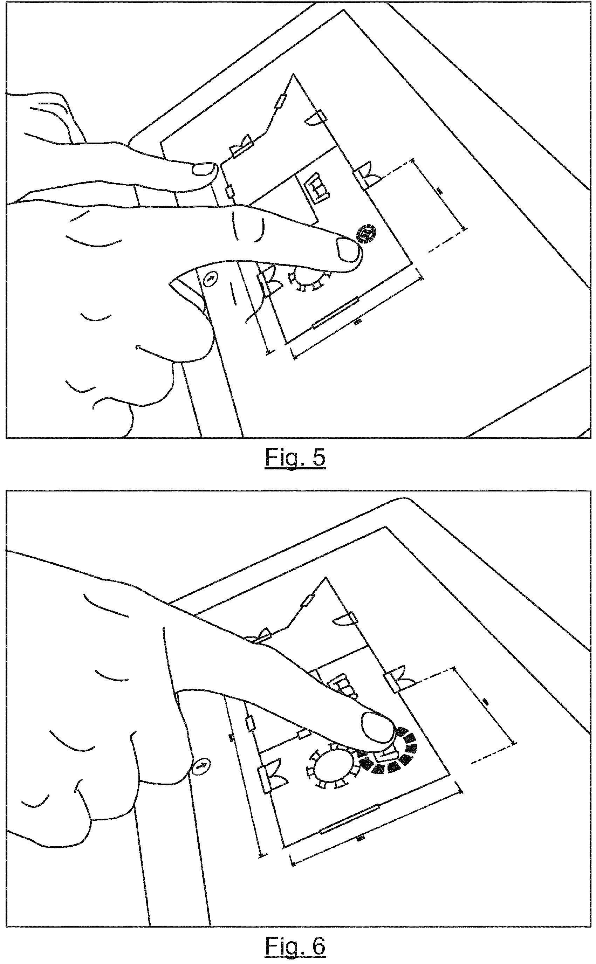

Dans le mode de réalisation présenté en relation avec les figures, en mode direct, l'utilisateur peut manipuler des objets graphiques sur un document. La première opération essentielle est la sélection d'un tel objet. Ceci est réalisé en appuyant sur un objet. Une bordure colorée entoure l'objet sélectionné, fournissant un retour visuel indiquant à la fois le passage en mode de manipulation direct et l'objet sélectionné. Par la suite, il suffit de taper un autre objet pour désélectionner l'objet préalablement sélectionné. Une fois sélectionné, ou directement après la sélection, le maintien et le glissé du doigt engendre un déplacement de l'objet sélectionné sur le document (Figures 6 à 8). L'objet suit le doigt pendant le mouvement et reste en place lorsque le doigt est levé.

### Action de mise à l'échelle et de rotation simultanée.

Lors de l'insertion d'objets graphiques en utilisant des gestes, l'objet est placé avec une taille et une orientation par défaut, que l'utilisateur pourrait vouloir ajuster par la suite. Les inventeurs proposent pour ce faire une technique de manipulation combinée à la rotation et la mise à l'échelle des objets autour de leur centre. Toujours commuté sur le mode direct, et après avoir sélectionné un objet, le toucher et le déplacement d'un doigt par rapport au centre de l'objet sélectionné permet de modifier l'objet à la fois par mise à l'échelle et par rotation.

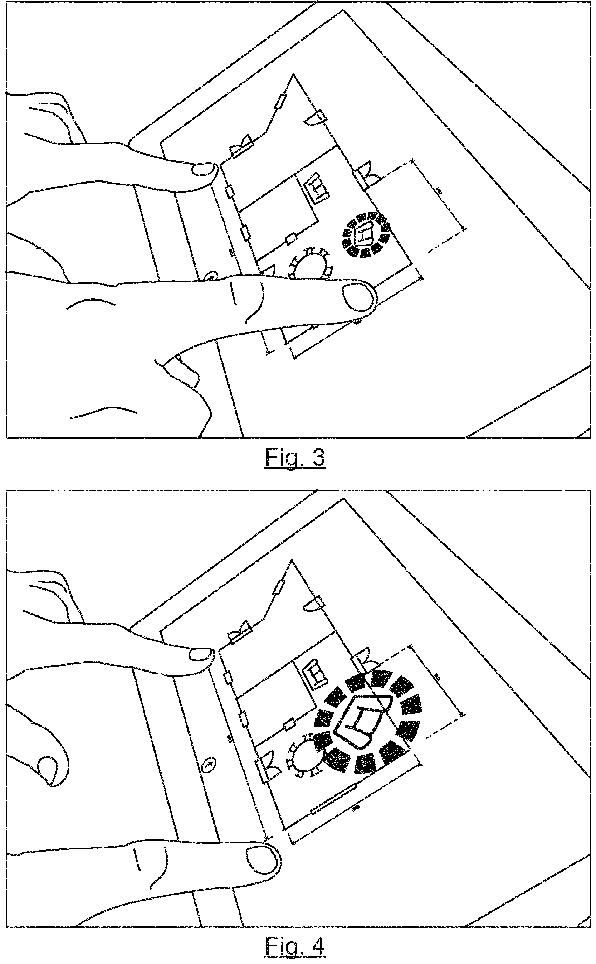

Le déplacement du doigt près du centre de l'objet permet de le réduire et vice versa. Le déplacement simultané du doigt dans un mouvement circulaire autour de l'objet va tourner l'objet en conséquence (Figures. 3 et 4). Ces manipulations s'effectuent à distance de l'objet manipulé, évitant ainsi les effets de masquage de l'objet par le doigt ou la main.

### Suppression d'objets

Lors de l'édition d'un document, l'utilisateur peut créer un objet avec un geste et mettre à jour sa position, sa taille et son orientation en utilisant le mode de prise directe, mais peut souhaiter supprimer un objet. Dans ce mode de réalisation de l'invention, la suppression d'un objet est mise en œuvre comme un cas particulier de la mise à l'échelle. Lorsque mise à l'échelle aboutie à la réduction en dessous d'une taille minimale prédéterminée, une icône de suppression apparaît sur l'objet (Figure 5). Lorsque l'utilisateur soulève le doigt, l'objet est supprimé du document, sauf s'il a été mis à l'échelle au-dessus de la taille minimale de nouveau.

### Copier-coller

L'une des actions primordiales qu'il est absolument nécessaire de posséder pour un système est la « copier /coller ». Les systèmes dans lesquels cette action fait défaut sont généralement peut appréciés du public (cela a par exemple été le cas lors de la sortie du premier iPhone).

Selon l'invention, comme alternative à l'ajout d'un objet en dessinant un geste, il est possible en mode édition (c'est-à-dire en mode direct) de copier et de coller des objets. La technique est très simple: après avoir posé un doigt sur un espace vide pour prévoir un passage en mode direct, l'utilisateur sélectionne un objet en appuyant dessus avec un second doigt, puis tape à nouveau dans un espace vide du document pour copier l'objet, avec la même échelle et à la même orientation que l'objet d'origine.

### Autres caractéristiques et avantages

Ainsi, comme on l'a vu dans ce mode de réalisation, l'invention permet de passer simplement d'un mode de prise direct à un mode de prise indirect à l'aide d'un élément supplémentaire propre à l'utilisateur (par exemple un doigt supplémentaire). Bien sûr, cette explication a été réalisée en prenant pour hypothèse que seuls deux modes alternatifs l'un de l'autre existaient. L'invention peut être mise en œuvre avec un nombre de modes supérieur à deux. Il suffit par exemple, d'utiliser un seul doigt pour le premier mode, un doigt supplémentaire, pour de deuxième mode, et ainsi de suite.

De plus, il est intéressant de préciser que le passage d'un mode à l'autre n'est pas nécessairement réalisé en maintenant un doigt dans une position fixe. Les deux doigts utilisés peuvent être en mouvement. Par exemple, le mouvement simultané de deux doigts sur l'écran permet de réaliser un défilement. Le même défilement peut être réalisé en maintenant un doigt posé et statique tandis qu'un deuxième doigt est en mouvement. Ceci n'est bien sûr qu'un exemple appliqué au défilement. D'autres situations et mouvements sont également envisageables.

Par ailleurs, d'autres modes de réalisation peuvent également être envisagés. Par exemple, dans un mode de réalisation alternatif, le passage d'un mode à l'autre peut être commandé par le moteur de reconnaissance gestuel lui-même. Plus particulièrement, le passage du mode indirect au mode direct peut être commandé ainsi. Il est ainsi possible de dessiner un geste en mode indirect, lequel geste, une fois reconnu par le moteur, permet de passer en mode direct et donc d'interagir avec un objet.

### 5.2.2 Apprentissage de gestes personnalisés et évolutifs.

L'utilisation d'un moteur de reconnaissance conjointement avec l'invention permet de mettre en œuvre une méthode d'apprentissage (et donc de reconnaissance) de gestes personnalisés d'une grande simplicité. Plus particulièrement, dans ce mode de réalisation, les inventeurs proposent un système et une méthode de définition de gestes, qui seront ensuite reconnus par le moteur de reconnaissance gestuel. Dans ce mode de réalisation, il s'agit d'apprendre à la machine comment reconnaître la gestuelle de l'utilisateur. Plus particulièrement, il s'agit de disposer d'une méthode de définition des gestes à destination du moteur de reconnaissance gestuel. Selon l'invention, il y a deux méthodes de définition et d'apprentissage de gestes personnalisés :
- l'apprentissage explicite ;
- l'apprentissage implicite.

### Apprentissage explicite

L'apprentissage explicite est décrit en relation avec la figure 1 et les figures 9 à 11.

L'invention, dans ce mode de réalisation, permet de donner à l'utilisateur la possibilité de définir sa propre bibliothèque geste pour diverses activités. Comme les gestes sont définis par l'utilisateur, il y a un besoin d'un mécanisme permettant de définir le geste, mais aussi de rechercher les gestes dans la bibliothèque de référence. Pour assurer à l'utilisateur le contrôle de sa bibliothèque de gestes, il est également nécessaire pour rendre ce mécanisme facilement accessible en tout temps et facile à utiliser. Pour ce faire, l'invention propose un panneau de contrôle gestuel conçu pour répondre à ces besoins.

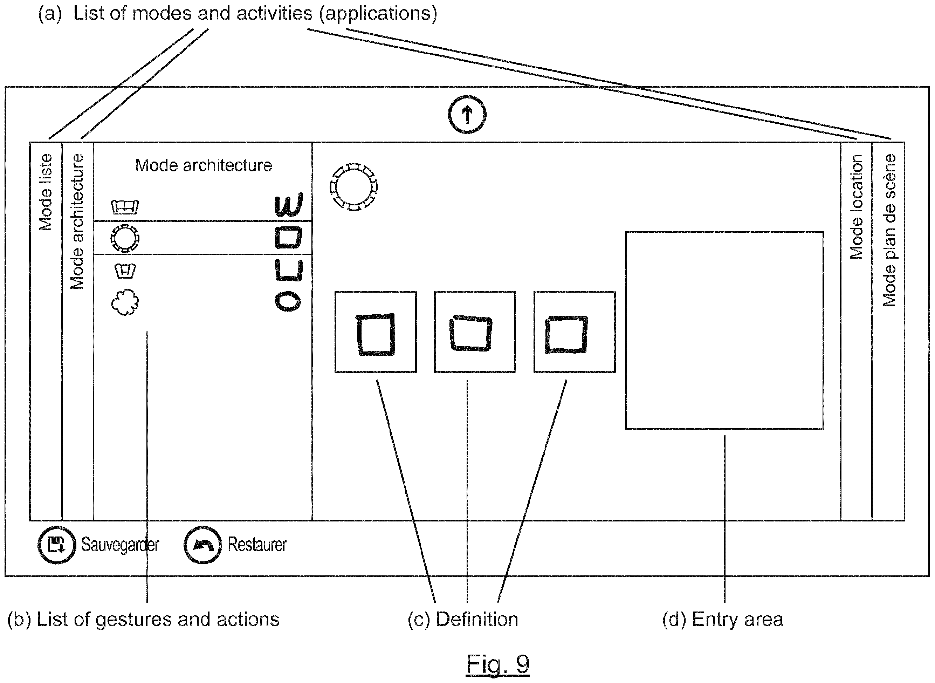

### Panneau de contrôle gestuel (figure 9)

Le panneau de contrôle gestuel dans l'application est un formulaire toujours disponible pour la consultation et l'édition des gestes définis par l'utilisateur. Il peut être activé en appuyant sur une « touche » d'accès rapide toujours visible en bas de l'écran (Fig. 1 - c, la touche d'accès rapide est représentée par la flèche entourée d'un cercle). Lors de l'activation, le panneau de contrôle coulisse et s'affiche sous la forme d'un volet (Fig. 9). Cet accès par l'intermédiaire d'une touche d'accès rapide est toujours présent et toujours accessible (non masqué) et aide à identifier le panneau de contrôle gestuel dans le cadre du système, plutôt que le panneau de contrôle gestuel fasse de faire partie d'une activité ou d'un élément du mode liste.

Étant donné que les actions à réaliser peuvent être complètement différentes entre les activités (applications), et puisque les activités (applications) sont modales (c'est-à-dire présentées à l'utilisateur en plein écran, et une à la fois), les ensembles de gestes sont indépendants. Cela signifie qu'un ensemble de gestes peut être définie pour une activité (ou une application) tandis qu'un autre ensemble de gestes peut être défini pour une autre activité (autre application).

Ainsi, l'utilisateur peut choisir de définir le même geste à effectuer pour différentes actions sans qu'ils interfèrent entre les activités (applications). Pour tenir compte de ces multiples ensembles d'actions indépendantes, le panneau de contrôle présente un accordéon horizontal permettant la gestion d'exactement une liste de gestes par activité (une pour le mode liste et une pour chaque activité (Fig. 9 - a)). Un seul geste est édité à la fois parmi cette liste.

Dans ce mode de réalisation, les pages de l'accordéon sont codées par couleur pour correspondre à la couleur de l'activité (de l'application) comme on le voit dans le mode liste. Bien sûr, ce n'est qu'un exemple de réalisation et il est possible de proposer une autre présentation en fonction des besoins, des contraintes et du "look and feel" du système d'exploitation.

Certains gestes peuvent être partagés entre toutes les activités et le mode liste. Cela représente des actions communes qui existent dans toutes les activités. Dans l'exemple d'application actuel, toutes les activités et le mode liste ont deux gestes en communs: le geste d'ouverture / fermeture et le geste d'annulation. Étant donné que ces deux gestes sont partagés globalement, l'utilisateur peut les trouver et éditer les gestes correspondants dans les pages en mode liste du panneau de contrôle gestuel, mais ces actions ne sont pas affichées sur les onglets spécifiques aux activités (ou aux applications). Ceci est un mode de réalisation particulier. Il est également possible de proposer une présentation des gestes comme étant « épinglés » sur toutes les pages du mode liste.

### Edition de Gestes Personnalisés

Dans cet exemple de réalisation, chaque page du panneau de contrôle gestuel présente à l'utilisateur une liste d'actions disponibles pour une activité (application) ou le mode liste (Fig. 9 - b). Une sélection d'un geste dans la liste du panneau de contrôle gestuel affiche les échantillons de geste pour la définition du geste et permet l'édition de ces échantillons.

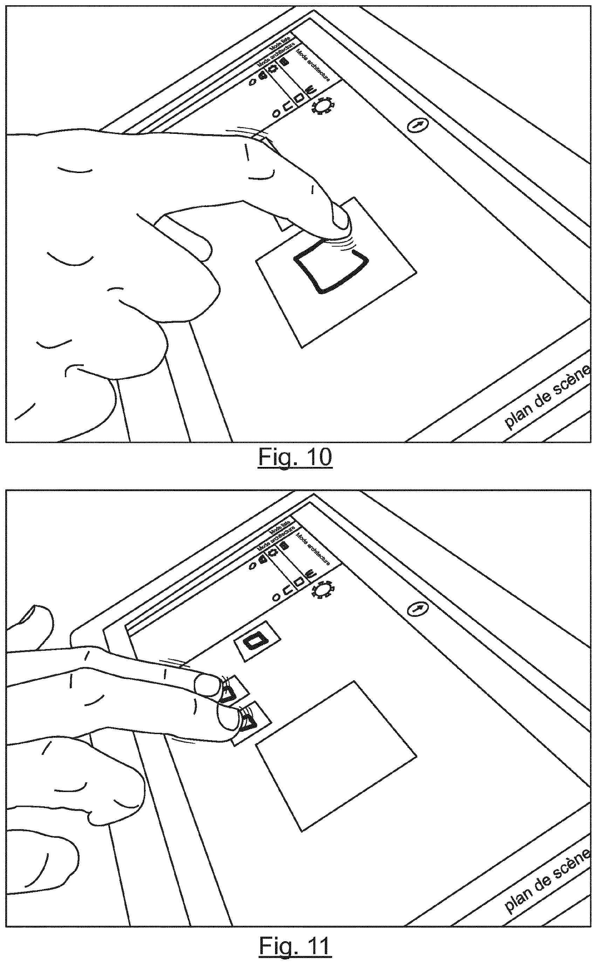

Les échantillons existants sont affichés dans une liste horizontale, appelée liste de définition des échantillons (Fig. 9 - d), avec une zone plus grande de dessin pour dessiner un nouvel échantillon (Fig. 9 - c). Le dessin d'un échantillon geste dans cette zone ajoute l'échantillon à la définition du geste (fig. 10). Visuellement, la saisie de l'utilisateur se « contracte » dans la liste de définitions des échantillons. Si un échantillon de geste de la liste apparaît mal dessiné ou si l'utilisateur veut changer son geste, il est possible de supprimer un échantillon de définition de la liste en le faisant glisser vers le haut ou vers le bas de la liste (fig. 11). La liste des gestes des panneaux présente un aperçu du geste, qui est mis à jour lorsque les échantillons de définition des gestes changent. Une liste de définition d'échantillons vide signifie que le geste est désactivé.

La fermeture du panneau de contrôle déclenche un recalcul (par le moteur de reconnaissance) des gestes modifiés, de sorte que les gestes nouveaux ou modifiés peuvent être immédiatement utilisés pour des actions gestuelles dans l'activité ou l'application concernée.

### Intégration Inter Applicative

Il s'agit d'un paradigme commun dans les systèmes d'exploitation des principaux acteurs de l'industrie (iOS, Android, Windows Phone 7 et Windows 8) pour fournir un « shell » (de l'anglais : couche logicielle qui fournit l'interface utilisateur d'un système d'exploitation) pour des applications indépendantes et en plein écran où l'utilisateur peut faire diverses activités.

Dans au moins un mode de réalisation, l'invention permet de rendre toutes les applications compatibles avec l'utilisation de gestes, pour les commandes à base de gestes (comme les raccourcis clavier trouvés dans des environnements informatiques de bureau) ou de la manipulation à l'aide de geste plus précis (comme l'insertion d'objets graphiques à un document). L'invention, dans au moins un mode de réalisation permet à l'utilisateur de définir une bibliothèque geste personnel indépendamment des applications et leurs fonctionnalités, faisant de la reconnaissance des gestes d'une partie de l'expérience utilisateur globale sur les dispositifs tactiles (ou assimilés).

En effet, l"application qui met en œuvre le panneau de contrôle gestuel gestuelle simule un « shell » graphique pour intégrer la bibliothèque de geste de l'utilisateur dans l'expérience tactile globale. On réalise ainsi une l'intégration du panneau de contrôle gestuel directement dans les shell graphiques des smartphones et des tablettes. Les applications peuvent ainsi exposer certaines de leurs fonctionnalités pour être associées à des gestes que l'utilisateur peut définir et gérer à partir d'une interface unique et cohérente.

### Apprentissage implicite

L'apprentissage implicite est réalisé au fur et à mesure de l'utilisation du geste par l'utilisateur. Plus particulièrement, l'apprentissage implicite est mis en œuvre en continu lors de l'acceptation (automatique) ou du refus de l'utilisateur consécutif au dessin d'un geste. Cette phase d'apprentissage implicite est plus particulièrement décrite ci-dessous.

### 5.2.3 Reconnaissance de gestes personnalisés

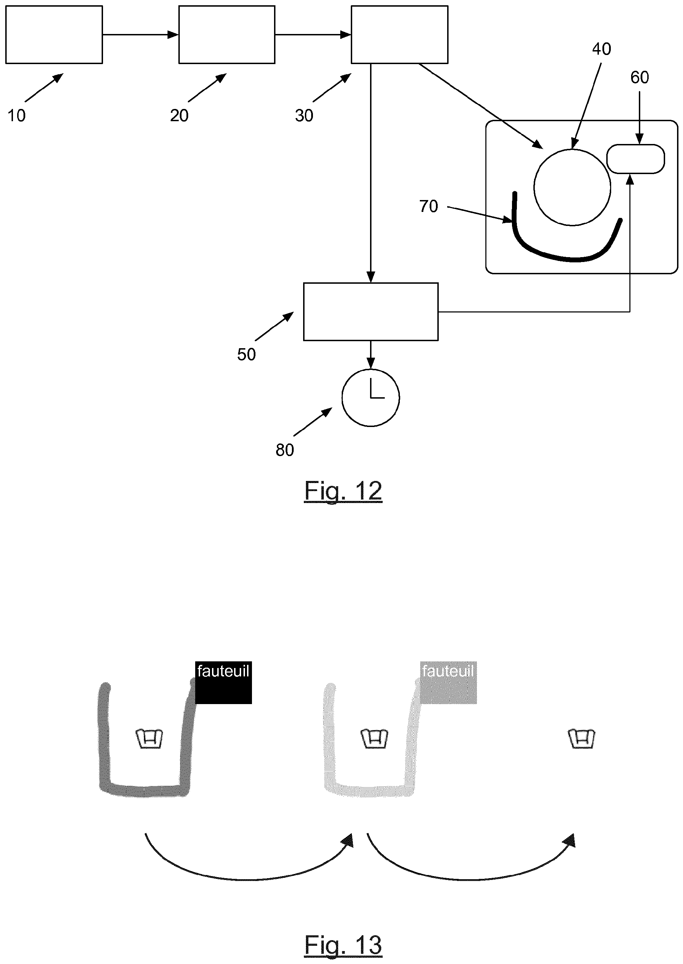

Le mécanisme de reconnaissance de geste personnalisé est basé sur l'acceptation (automatique) ou du refus de l'utilisateur consécutif au dessin d'un geste. Dans ce mode de réalisation, l'invention se présente comme une méthode d'interaction avec un moteur de reconnaissance gestuel en mode de manipulation indirecte. Plus particulièrement, la méthode comprend les étapes suivantes, décrites en relation avec la figure 12 :
- dessin (10) d'un geste par l'utilisateur et affichage (20) du dessin sur l'écran ;
- à la fin du dessin, après un laps de temps prédéterminé (ou suite au retrait du doigt de l'utilisateur de l'écran), affichage (30) de la forme reconnue (40) par le moteur de reconnaissance ;
   - Selon le type de commande associée au geste - si elle est immédiate comme l'insertion d'objet - l'action sera réalisée à cette étape.
- affichage (50) d'une donnée représentative de la forme reconnue (60) dans une zone proche de la fin du dessin réalisé par l'utilisateur (70), appelée donnée de retour visuel.
- Initialisation d'un compteur temporel de validation (80), pour un période de temps prédéterminée (compris par exemple entre ½ et deux secondes).
   - le compteur temporel de validation, dans ce mode de réalisation de l'invention, est mis en œuvre pour réaliser un effacement progressif de la donnée représentative de la forme reconnue (60), laquelle peut être une icône ou un texte explicatif de la forme reconnue.
- Lorsqu'aucune action n'intervient à l'issue de l'écoulement de la période temporelle définie par ledit compteur, la forme reconnue (40) est validée.
   - La commande associée au geste reconnu sera réalisée à cette étape si elle de type « exécution retardée ».
- Lorsqu'une action intervient préalablement à l'écoulement de la période temporelle définie par ledit compteur, mise en œuvre d'un mécanisme correctif (décrit ci-après).

Les différentes étapes de la méthode sont détaillées ci-après.

### Étape d'affichage de la donnée représentative de la forme reconnue.

Dans un mode de réalisation de l'invention, lors de l'élaboration d'un geste (par exemple lors du dessin), précisément lorsque l'utilisateur lève son doigt, on présente à l'utilisateur une rétroaction simple qui comprend le nom de l'action qui correspond au geste reconnu. Cette rétroaction est la donnée représentative de la forme reconnue.

Dans ce mode de réalisation, cette rétroaction prendre la forme d'un rectangle contrasté placé à la fin du geste (figure 13). Le geste tracé et la donnée représentative de ce geste restent visibles pendant 1,6 secondes avant de disparaître progressivement comme illustré en figure 13. Ce positionnement et la nature transitoire de la donnée représentative (la nature transitoire est illustrée par le fait que la donnée représentative disparaît peu à peu) permettent une observation accrue de la part de l'utilisateur tout en étant non-bloquant et non intrusif.

En outre, la continuité visuelle de la trace du geste (c'est-à-dire la continuité de l'affichage de ce que l'utilisateur a dessiné) et la rétroaction (l'affichage de la donnée représentative de ce geste) permet de faire un lien logique entre le dessin réalisé et le geste.

Une fois que le dessin réalisé et que la donnée représentative de la forme reconnue ont disparu, on considère que l'utilisateur a reçu les informations nécessaires et que la reconnaissance est implicitement validée (le moteur de reconnaissance renforce alors automatiquement sa connaissance dans ce sens).

Comme indiqué dans le tableau 1, une distinction est faite entre les commandes à exécution retardée et les commandes à exécution immédiates comme l'insertion d'objets. Bien que la méthode d'affichage reste la même, une commande retardée ne s'exécute que lorsque le retour disparaît alors qu'une insertion d'un objet se produit immédiatement.

L'objet de cette méthode d'affichage est de donner du temps à l'utilisateur de corriger le geste pour des commandes qui ne sont pas naturellement annulables.

### Mécanisme correctif de la forme reconnue

Lorsqu'un geste est dessiné par l'utilisateur, une erreur de reconnaissance peut se produire. Il peut y avoir deux raisons à ces erreurs: l'utilisateur à mal dessiné le geste (pour diverses raisons allant de la gêne physique à l'oublie du geste) ou le moteur de reconnaissance est en faute. Les inventeurs ont eu l'idée de permettre l'utilisation de ces deux types d'erreur en permettant respectivement d'oublier l'entrée saisie (ou dessinée) ou d'apprendre de cette entrée.

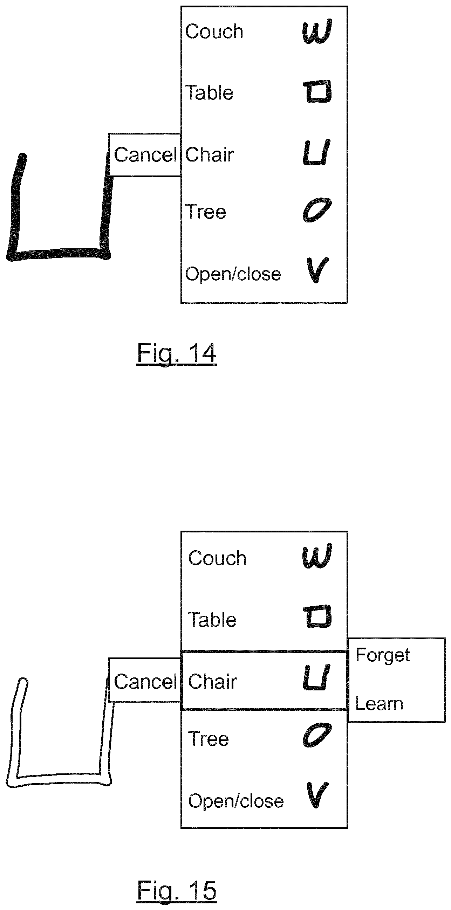

Toutefois l'intervention de l'utilisateur est nécessaire pour identifier ces deux situations. Ainsi, un mécanisme de correction à plusieurs étapes est proposé (Fig. 14 et 15). Ce mécanisme est déclenché en réalisant une action préalablement à l'écoulement de la période temporelle définie par le compteur temporel. Dans un mode de réalisation, le mécanisme est déclenché en appuyant (cliquant) sur la donnée représentative de la forme reconnue avant qu'elle ne disparaisse (il s'agit de l'étape d'initialisation). Une liste de tous les gestes disponibles dans le cadre de l'application en cours d'exécution est alors affichée à côté du nom geste (il s'agit de l'étape de présentation). La liste comprend les noms des gestes ainsi que les images miniatures des gestes pour une comparaison avec le geste dessiné par l'utilisateur (alternativement, seules les miniatures peuvent être représentées, ce qui permet d'adapter la méthode de l'invention aux écrans de petite taille). L'utilisateur peut sélectionner le geste prévu en tapant sur la liste (il s'agit de l'étape de sélection). Une fois sélectionné le bon geste, la troisième étape met en œuvre un affichage de deux options afin que l'utilisateur puisse indiquer le type d'erreur, « mauvais dessin » ou erreur de reconnaissance, en demandant au moteur respectivement d'oublier ou d'apprendre l'entrée dessinée.

En d'autres termes, le mécanisme correctif comprend :
- une étape d'initialisation du mécanisme correctif ;
- une étape d'affichage d'une liste de gestes possibles ;
- une étape de sélection d'un geste dans la liste de geste ;
- une étape d'affichage d'une action à réaliser par le moteur de reconnaissance (oubli ou apprentissage).

### 5.2.4 Mémorisation de gestes complexes par l'utilisateur.

Outre la définition de gestes personnalisés et intuitifs, l'invention permet également, dans au moins un mode de réalisation, d'apprendre des gestes attendus par le moteur de reconnaissance visuel. Les gestes en question peuvent être monoblocs (c'est-à-dire qu'il s'agit d'un seul geste), ou multiblocs (c'est-à-dire des gestes complexes formés de l'enchainement de plusieurs gestes monoblocs). Les gestes complexes ont par exemple des racines communes entre gestes de la même famille. Dans ce mode de réalisation, il s'agit d'assister l'utilisateur dans son apprentissage des gestes qui sont attendus par la machine (il s'agit donc de la situation inverse de celle présentée préalablement dans laquelle l'utilisateur dessine ses propres gestes).

L'assertion à la base de ce mode de réalisation de l'invention est la suivante : la forme graphique des gestes intègre la sémantique d'une hiérarchie de commandes (factorisation du début du dessin des gestes associés à la même famille de commande/racine commune pour le dessin de gestes d'une même famille de commandes). Plus généralement : pour certains gestes associés aux commandes d'une même famille, il peut être intéressant de factoriser (une racine graphique commune est utilisée pour identifier la famille de commande, il s'agit d'un premier geste monobloc). La différentiation est ensuite réalisée par la suite du dessin, en enchainant avec une autre geste monobloc (qui permet donc une identification de la commande au sein de la famille). En revanche, pour d'autres gestes, même au sein d'une même famille de commandes, il peut être préférable de conserver des dessins complètement différents pour chacun d'eux (plus facilement mémorisable, manipulable et identifiable).

Selon l'invention, le menu gestuel d'aide à la mémorisation proposé permet :
- de concilier ces deux façons de concevoir ses gestes en mettant en évidence graphiquement (selon deux procédés complémentaires) pour l'utilisateur ces éléments sémantiques (hiérarchisation) dans le cadre de famille de commandes ;
- d'aider l'utilisateur à apprendre ces gestes en l'incitant à réaliser le dessin des gestes quand il va utiliser ce menu gestuel d'aide.

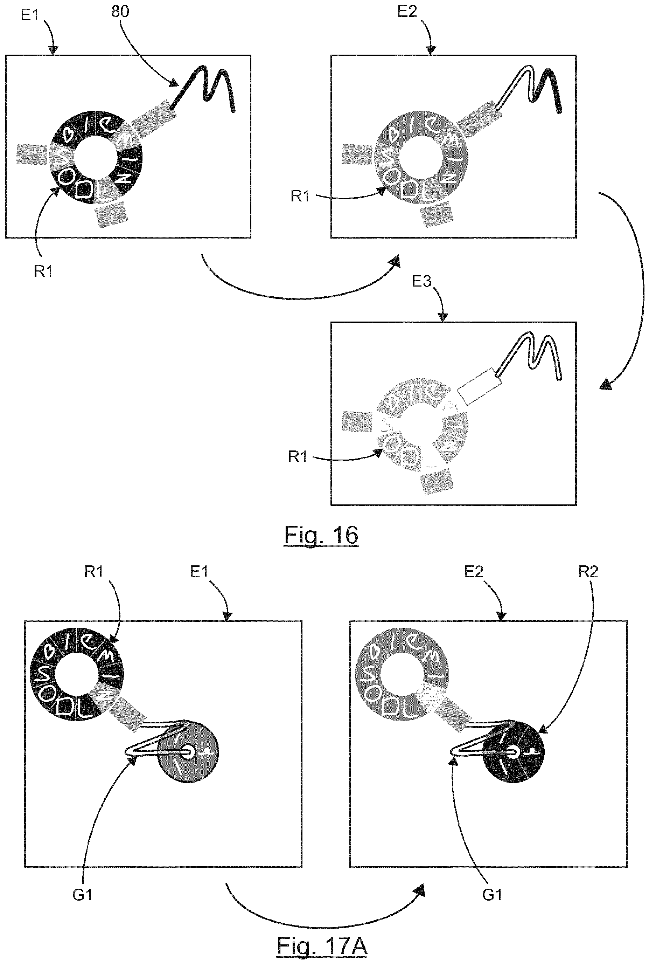

Pour ce faire, l'invention met en œuvre d'une part une combinaison de techniques d'affichage spécifiques et d'autre part une interface simplifiée. Un mode de réalisation de l'invention est présenté en relation avec les figures 16 à 18. L'idée à la base de ce mode de réalisation de l'invention part du constat qu'un geste complexe, définissant une action par elle-même complexe, est une succession de gestes simples (monobloc). On présente, en relation avec la figure 16, un exemple de geste monobloc. Plus particulièrement, on présente en figure 16 un dessin 80 représentatif d'un geste monobloc. Comme explicité préalablement, un geste, qu'il soit simple (monobloc) ou complexe (enchainement de gestes simples) correspond, selon l'invention, à une action à réaliser dans une application. Dans la figure 16, le geste monobloc 80 permet de sélectionner une épaisseur de crayon. Dans d'autres exemples, ce geste permet l'ouverture d'une application prédéfinie, l'ouverture d'une boite de dialogue, etc. Ces exemples ne sont qu'illustratifs et ne limites en rien la portée de la méthode décrite.

Partant de la constatation qu'un geste complexe est une succession de gestes simples, les inventeurs ont eu l'idée de découper l'apprentissage des gestes complexes en un apprentissage d'une succession de gestes simples. Pour ce faire, une première étape consiste à afficher, à un emplacement prédéterminé de l'écran, ou à l'emplacement du stylet/doigt de l'utilisateur lorsqu'il le maintien sur la surface tactile, un ensemble de gestes simples prédéterminé. Cet affichage peut être réalisé sous la forme d'une roue, comprenant l'ensemble de gestes simple. Dans l'exemple de la figure 16, pour des gestes monoblocs, une roue R1 est successivement présentée sur trois vues successives (El, E2, E3). Comme illustré dans ce mode de réalisation, seuls les gestes relatifs à un contexte donné sont mis en surbrillance. Lorsque l'utilisateur débute la tracé du geste (ici le geste 80), la roue s'estompe (vue E2) et seul le geste que l'utilisateur a commencé à tracer reste affiché. Ensuite, lorsque l'utilisateur a achevé son tracé (vue E3), la roue R1 a quasiment disparue et seul le geste reste visible.

Ainsi, une roue, comprenant quelques gestes simples est affichée au centre de la zone tactile. L'utilisateur parcourt cette roue pour sélectionner le geste qu'il recherche. L'utilisateur valide ensuite sa sélection en suivant le tracé du geste (c'est-à-dire en effectuant le geste)

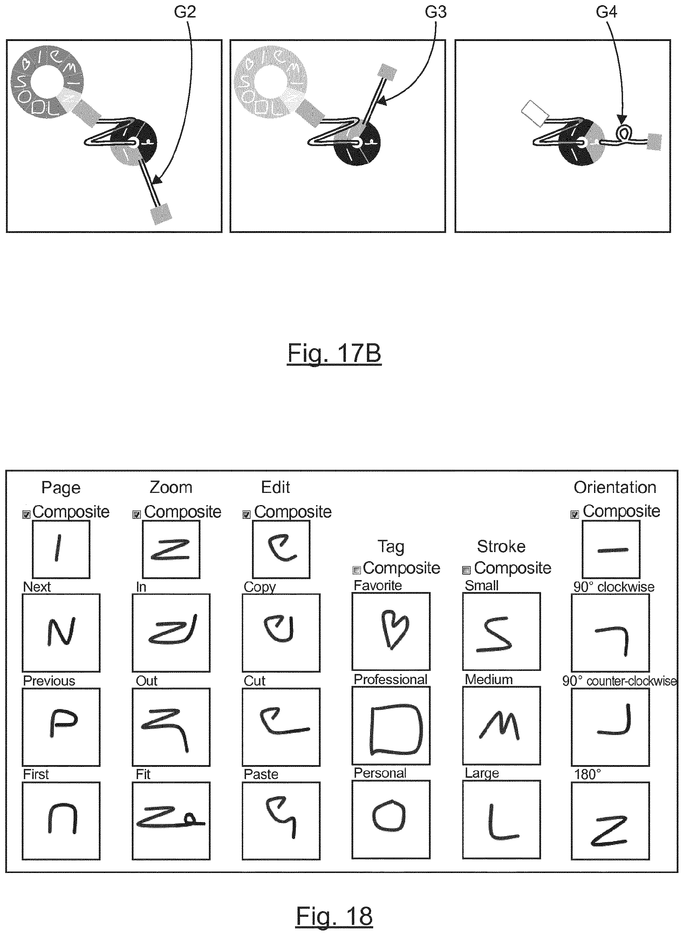

Dans une deuxième mode de réalisation, présenté en relation avec les figures 17A et 17B, deux gestes monoblocs (G1 et G2 ou G1 et G3 ou G1 et G4) sont successivement tracés pour obtenir un geste complexe (G1+G2 ou G1+G3 ou G1+G3). Une première portion du geste complexe est reconnue, par l'intermédiaire de l'aide de la roue R1 (il s'agit du geste monobloc initial, noté G1, vue E1). Dans une deuxième phase, pour poursuivre l'apprentissage, une deuxième roue apparaît (Vue E2, roue R2). Elle comprend également un certain nombre de gestes simples (trois dans l'exemple illustré). Ces trois gestes monoblocs dans la roue R2 correspondent à trois sous commandes de la commande associée au geste G1. Intuitivement, l'utilisateur est invité à poursuivre son geste par le tracé, sur l'écran, d'un deuxième geste simple. Le procédé de l'invention est alors à nouveau mis en œuvre (figure 17B) : en fonction du geste tracé, le moteur sélectionne d'abord un sous ensemble, puis un unique geste (G2, ou G3 ou G4).

Le geste complexe est alors défini (GC par exemple formé de G1 et de G2). Cet apprentissage de l'utilisateur par succession de gestes simples est évidemment beaucoup plus intuitif que l'apprentissage en bloc, tel qu'il a pu être proposé dans les méthodes de l'art antérieur. La méthode de l'invention permet à l'utilisateur d'apprendre par la pratique et l'observation de nombreux gestes complexes permettant, par exemple, de réaliser rapidement des actions dans les applications.

Le principe est que tant qu'il est possible de continuer le geste complexe pour définir une action, une nouvelle roue apparaît lorsque qu'un geste simple a été défini. Dans un mode de réalisation de l'invention, le nombre d'éléments de la première roue affichée correspond au nombre de menus de l'application (par exemple les menus « Accueil », « Insertion », « Edition », etc.). La seconde roue affichée correspond aux sous menus du menu initialement reconnu (par exemple si le premier geste simple a permis de reconnaître le menu « Edition », la roue suivante comprend par exemple les éléments correspondants aux actions « sélectionner », « sélectionner tout », « couper », « copier », « coller ». Ainsi, tous les gestes complexes correspondant à une action du menu édition commencent par le même geste simple et seule la terminaison du geste complexe (c'est-à-dire dans l'exemple le deuxième geste simple), permet d'identifier précisément l'action à réaliser.

Alternativement, pour les écrans de petites dimensions (tels que les smartphones), les roues ne sont pas toutes affichées. Lorsque le geste simple a été reconnu, le roue correspondant à ce geste est soit effacée de l'écran, soit réduite, afin de permettre l'affichage de la roue suivante.

A l'inverse, pour les écrans de grande taille, il est possible de laisser les roues successives affichées en permanence.

Plus généralement, tel que présenté en relation avec la figure 18, les actions sont catégorisées et hiérarchisées, par exemple par l'utilisateur ou encore par le développeur d'application. Dans la figure 18, des actions liées à la gestion des pages, au zoom, à l'édition, etc. sont présentées comme étant des actions « composites » qui sont en réalité des gestes complexes (comprenant au moins deux gestes monoblocs). Les gestes complexes («suivant», «précédent», « premier »), ont par exemple une racine commune qui est par la suite utilisée pour composer le geste en question. On retrouve dans la figure 18 les gestes associés aux zooms, présentés en relation avec les figures 17A et 17B et les gestes relatifs à la taille du trait du dessin (« petit », « moyen » et « large » présentés en relation avec la figure 16. Ces gestes relatifs à la taille du trait du dessin ne sont pas catégorisés (ce ne sont pas des gestes composites).

Si l'utilisateur ou le développeur souhaite rendre ces gestes composites, il peut cocher la case « composite » et alors définir une racine commune à ces gestes.

Ainsi, on facilite grandement, d'une part la configuration des gestes pour une ou plusieurs applications données et d'autre part la facilité avec laquelle ces gestes peuvent être appris.

## Revendications

1. Procédé de sélection, parmi au moins deux modes disponibles, d'un mode d'interaction entre un utilisateur et un dispositif numérique de restitution, ledit dispositif numérique de restitution comprenant des moyens d'obtention d'au moins une information représentative d'un geste effectué par un utilisateur, ledit geste étant effectué à l'aide d'au moins un membre ou d'au moins une partie d'un membre par ledit utilisateur, ledit procédé étant **caractérisé en ce qu'**il comprend :
- une étape d'obtention d'un nombre de membres ou de parties de membres utilisées pour effectuer ledit geste ;
- lorsque ledit nombre excède une première valeur prédéterminée, sélection d'un premier mode d'interaction parmi lesdits au moins deux modes disponibles, ledit premier mode consistant à activer un moteur de reconnaissance gestuel intégré au sein dudit dispositif numérique de restitution, afin de permettre une reconnaissance de gestes personnalisés, lesdits gestes personnalisés définissant des commandes à exécuter ;
- lorsque ledit nombre est inférieur ou égal à une deuxième valeur prédéterminée, sélection d'un deuxième mode d'interaction parmi lesdits au moins deux modes disponibles, ledit deuxième mode consistant à désactiver un moteur de reconnaissance gestuel intégré au sein dudit dispositif numérique de restitution ;
et, lorsque ledit premier mode d'interaction est sélectionné :
∘ une étape de reconnaissance d'un geste personnalisé effectué par l'utilisateur ;
∘ une étape d'affichage (50) d'une donnée représentative d'une forme reconnue (60) par le moteur de reconnaissance gestuel ;
∘ une étape d'initialisation d'un compteur temporel de validation (80), pour une période de temps prédéterminée ;
∘ lorsqu'aucune action n'intervient sur ledit dispositif numérique de restitution pendant ladite période de temps prédéterminée, une étape de validation de ladite forme reconnue, ladite étape de validation comprenant une étape d'exécution d'une commande associée à ladite forme reconnue ;
∘ lorsqu'une action intervient sur ledit dispositif numérique de restitution pendant ladite période de temps prédéterminée :
▪ une étape d'initialisation d'un mécanisme correctif;
▪ une étape d'affichage d'une liste de gestes disponibles dans le cadre d'une application en cours d'exécution sur ledit dispositif numérique de restitution ;
▪ une étape d 'affichage d'une action à réaliser par le moteur de reconnaissance gestuel, en réponse à la sélection, par l'utilisateur, d'un geste dans ladite liste de gestes disponibles.

2. Procédé de sélection, selon la revendication 1, **caractérisé en ce que** ledit terminal de restitution comprend une surface tactile et **en ce que** ledit au moins un membre est une main et ladite au moins une partie d'un membre est un doigt.

3. Procédé de sélection, selon la revendication 1, **caractérisé en ce que** ledit terminal de restitution comprend caméra stéréoscopique et **en ce que** ledit au moins un membre est un bras et ladite au moins une partie d'un membre est une main.

4. Procédé de sélection, selon la revendication 1, **caractérisé en ce que** ladite première valeur prédéterminée est égale à ladite deuxième valeur prédéterminée et **en ce que** ce ladite première valeur prédéterminée est égale à un.

5. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de sélection selon l'une au moins des revendications 1 à 4, lorsqu'il est exécuté sur un ordinateur.

6. Dispositif numérique de restitution d'informations comprenant des moyens de sélection, parmi au moins deux modes disponibles, d'un mode d'interaction entre un utilisateur et ledit dispositif numérique de restitution, ledit dispositif numérique de restitution comprenant des moyens d'obtention d'au moins une information représentative d'un geste effectué par un utilisateur, ledit geste étant effectué à l'aide d'au moins un membre ou d'au moins une partie d'un membre par ledit utilisateur, ledit dispositif étant **caractérisé en ce qu'**il comprend
- des moyens d'obtention d'un nombre de membres ou de parties de membres utilisées pour effectuer ledit geste ;
- lorsque ledit nombre excède une première valeur prédéterminée, des moyens de sélection d'un premier mode d'interaction parmi lesdits au moins deux modes disponibles, ledit premier mode consistant à activer un moteur de reconnaissance gestuel intégré au sein dudit dispositif numérique de restitution, afin de permettre une reconnaissance de gestes personnalisés ;
- lorsque ledit nombre est inférieur ou égal à une deuxième valeur prédéterminée, des moyens de sélection d'un deuxième mode d'interaction parmi lesdits au moins deux modes disponibles, ledit deuxième mode consistant à désactiver un moteur de reconnaissance gestuel intégré au sein dudit dispositif numérique de restitution ; et, lorsque ledit premier mode d'interaction est sélectionné :
∘ des moyens de reconnaissance d'un geste personnalisé effectué par l'utilisateur;
∘ des moyens d'affichage d'une donnée représentative d'une forme reconnue par le moteur de reconnaissance gestuel ;
∘ des moyens d'initialisation d'un compteur temporel de validation, pour une période de temps prédéterminée ;
∘ lorsqu'aucune action n'intervient sur ledit dispositif numérique de restitution pendant ladite période de temps prédéterminée, des moyens de validation de ladite forme reconnue, lesdits moyens de validation comprenant des moyens d'exécution d'une commande associée à ladite forme reconnue ;
∘ lorsqu'une action intervient sur ledit dispositif numérique de restitution pendant ladite période de temps prédéterminée :
▪ des moyens d'initialisation d'un mécanisme correctif;
▪ des moyens d'affichage d'une liste de gestes disponibles dans le cadre d'une application en cours d'exécution sur ledit dispositif numérique de restitution ;
▪ des moyens d'affichage d'une action à réaliser par le moteur de reconnaissance gestuel, en réponse à la sélection, par l'utilisateur, d'un geste dans ladite liste de gestes disponibles.

## Patentansprüche

1. Verfahren zur Auswahl eines Interaktionsmodus zwischen einem Benutzer und einer digitalen Wiedergabeeinrichtung aus mindestens zwei verfügbaren Modi, wobei die Wiedergabeeinrichtung Mittel zum Erhalt mindestens einer für eine von einem Benutzer ausgeführte Geste repräsentativen Information umfasst, wobei die Geste mit Hilfe mindestens einer Gliedmaße oder mindestens eines Teils einer Gliedmaße vom Benutzer ausgeführt wird, wobei das Verfahren **dadurch gekennzeichnet ist, dass** es umfasst:
- einen Schritt der Erfassung einer Anzahl von Gliedmaßen oder Teilen von Gliedmaßen, die verwendet werden, um die Geste auszuführen;
- wenn die Anzahl einen ersten vorbestimmten Wert überschreitet, Auswahl eines ersten Interaktionsmodus aus den mindestens zwei verfügbaren Modi, wobei der erste Modus darin besteht, einen Gestenerkennungsmotor zu aktivieren, der in der digitalen Wiedergabeeinrichtung integriert ist, um eine Erkennung von personalisierten Gesten zu ermöglichen, wobei die personalisierten Gesten auszuführende Befehle definieren;
- wenn die Anzahl kleiner oder gleich einem zweiten vorbestimmten Wert ist, Auswahl eines zweiten Interaktionsmodus aus den mindestens zwei verfügbaren Modi, wobei der zweite Modus darin besteht, einen Gestenerkennungsmotor zu deaktivieren, der in der digitalen Wiedergabeeinrichtung integriert ist;
und wenn der erste Interaktionsmodus ausgewählt wird:
∘ einen Schritt der Erkennung einer vom Benutzer ausgeführten personalisierten Geste;
∘ einen Schritt der Anzeige (50) einer Angabe, die für eine vom Gestenerkennungsmotor erkannte Form (60) repräsentativ ist;
∘ einen Schritt der Initialisierung eines Validierungszeitzählers (80) für eine vorbestimmte Zeitdauer;
∘ wenn keine Aktion an der digitalen Wiedergabeeinrichtung während der vorbestimmten Zeitdauer vorgenommen wird, einen Schritt der Validierung der erkannten Form, wobei der Schritt der Validierung einen Schritt der Ausführung eines der erkannten Form zugeordneten Befehls umfasst;
∘ wenn eine Aktion an der digitalen Wiedergabeeinrichtung während der vorbestimmten Zeitdauer vorgenommen wird:
▪ einen Schritt der Initialisierung eines Korrekturmechanismus;
▪ einen Schritt der Anzeige einer Liste von Gesten, die im Rahmen einer Anwendung, die gerade auf der digitalen Wiedergabevorrichtung ausgeführt wird, verfügbar sind;
▪ einen Schritt der Anzeige einer vom Gestenerkennungsmotor durchzuführenden Aktion als Antwort auf die Auswahl einer Geste in der Liste der verfügbaren Gesten durch den Benutzer.

2. Auswahlverfahren nach Anspruch 1, **dadurch gekennzeichnet, dass** das Wiedergabeendgerät eine Berührungsfläche umfasst und dass die mindestens eine Gliedmaße eine Hand ist und der mindestens eine Teil einer Gliedmaße ein Finger ist.

3. Auswahlverfahren nach Anspruch 1, **dadurch gekennzeichnet, dass** das Wiedergabeendgerät eine stereoskopische Kamera umfasst und dass die mindestens eine Gliedmaße ein Arm ist und der mindestens eine Teil einer Gliedmaße eine Hand ist.

4. Auswahlverfahren nach Anspruch 1, **dadurch gekennzeichnet, dass** der erste vorbestimmte Wert gleich dem zweiten vorbestimmten Wert ist und dass der erste vorbestimmte Wert gleich eins ist.

5. Von einem Kommunikationsnetz aus herunterladbares und/oder auf einem von einem Computer lesbaren Träger gespeichertes und/oder von einem Mikroprozessor ausführbares Computerprogrammprodukt, **dadurch gekennzeichnet, dass** es Programmcodeanweisungen für die Ausführung des Auswahlverfahrens nach mindestens einem der Ansprüche 1 bis 4 umfasst, wenn es auf einem Computer ausgeführt wird.

6. Digitale Informationswiedergabeeinrichtung, umfassend Mittel zur Auswahl eines Interaktionsmodus zwischen einem Benutzer und der digitalen Wiedergabeeinrichtung aus mindestens zwei verfügbaren Modi, wobei die Wiedergabeeinrichtung Mittel zum Erhalt mindestens einer für eine von einem Benutzer ausgeführte Geste repräsentativen Information umfasst, wobei die Geste mit Hilfe mindestens einer Gliedmaße oder mindestens eines Teils einer Gliedmaße vom Benutzer ausgeführt wird, wobei die Einrichtung **dadurch gekennzeichnet ist, dass** sie umfasst:
- Mittel zur Erfassung einer Anzahl von Gliedmaßen oder Teilen von Gliedmaßen, die verwendet werden, um die Geste auszuführen;
- wenn die Anzahl einen ersten vorbestimmten Wert überschreitet, Mittel zur Auswahl eines ersten Interaktionsmodus aus den mindestens zwei verfügbaren Modi, wobei der erste Modus darin besteht, einen Gestenerkennungsmotor zu aktivieren, der in der digitalen Wiedergabeeinrichtung integriert ist, um eine Erkennung von personalisierten Gesten zu ermöglichen;
- wenn die Anzahl kleiner oder gleich einem zweiten vorbestimmten Wert ist, Mittel zur Auswahl eines zweiten Interaktionsmodus unter den mindestens zwei verfügbaren Modi, wobei der zweite Modus darin besteht, einen Gestenerkennungsmotor zu deaktivieren, der in die digitale Wiedergabeeinrichtung integriert ist;
und wenn der erste Interaktionsmodus ausgewählt wird:
∘ Mittel zur Erkennung einer vom Benutzer ausgeführten personalisierten Geste;
∘ Mittel zur Anzeige einer Angabe, die für eine vom Gestenerkennungsmotor erkannte Form repräsentativ ist;
∘ Mittel zur Initialisierung eines Validierungszeitzählers für eine vorbestimmte Zeitdauer;
∘ wenn keine Aktion an der digitalen Wiedergabeeinrichtung während der vorbestimmten Zeitdauer vorgenommen wird, Mittel zur Validierung der erkannten Form, wobei die Validierungsmittel Mittel zur Ausführung eines der erkannten Form zugeordneten Befehls umfassen;
∘ wenn eine Aktion an der digitalen Wiedergabeeinrichtung während der vorbestimmten Zeitdauer vorgenommen wird:
▪ Mittel zur Initialisierung eines Korrekturmechanismus;
▪ Mittel zur Anzeige einer Liste von Gesten, die im Rahmen einer Anwendung, die gerade auf der digitalen Wiedergabeeinrichtung ausgeführt wird, verfügbar sind;
▪ Mittel zur Anzeige einer vom Gestenerkennungsmotor durchzuführenden Aktion als Antwort auf die Auswahl einer Geste in der Liste der verfügbaren Gesten durch den Benutzer.

## Claims

1. Method for selecting a mode of interaction between a user and a digital playback device from among at least two available modes, said digital playback device comprising means for obtaining at least one piece of information representing a gesture performed by a user, said gesture being performed by said user by means of at least one limb or at least one part of a limb, said method being **characterized in that** it comprises:
- a step for obtaining a number of limbs or parts of limbs used to carry out said gesture;
- when said number exceeds a first predetermined value, selecting a first mode of interaction from among said at least two available modes, said first mode consisting in activating a gesture recognition engine embedded in said digital playback device, so as to enable recognition of customized gestures, said customized gestures defining commands to perform;
- when said number is smaller than or equal to a second predetermined value, selecting a second mode of interaction from among said at least two available modes, said second mode consisting in deactivating a gesture recognition engine embedded in said digital playback device;
- and, when the first mode of interaction is selected:
- a step for recognizing a customized gesture carried out by the user;
- a step for displaying (50) of a piece of data representing a shape (60) recognized by the gesture recognition engine;
- a step for initializing a validation time counter (80) for a predetermined period of time;
- when no action takes place on said digital playback device during said predetermined period of time, a step for validating said recognized shape, said step for validating comprising a step for performing a command associated with said recognized shape;
- when an action takes place on said digital playback device during said predetermined period of time:
- a step for initializing a corrective mechanism;
- a step for displaying a list of possible gestures associated with an application currently executing on said digital playback device;
- a step for displaying an action to be performed by the gesture recognition engine, in response to the selection, by the user, of a gesture in said list of possible gestures.

2. Method for selecting according to claim 1, **characterized in that** said playback terminal comprises a tactile surface and **in that** said at least one limb is a hand and said at least one part of a limb is a finger.

3. Method for selecting according to claim 1, **characterized in that** said playback terminal comprises a stereoscopic camera and **in that** said at least one limb is an arm and said at least one part of a limb is a hand

4. Method for selecting according to claim 1, **characterized in that** said first predetermined value is equal to said second predetermined value and **in that** said first predetermined value is equal to one.

5. Computer program product downloadable from a communications network and/or stored on a computer-readable support and/or executable by a microprocessor, **characterized in that** it comprises program code instructions for executing the method for selecting according to at least one of the claims 1 to 4, when it is executed on a computer.

6. Digital playback device comprising means for selecting a mode of interaction between a user and said digital playback device from among at least two available modes, said digital playback device comprising means for obtaining at least one piece of information representing a gesture performed by a user, said gesture being performed by said user by means of at least one limb or at least one part of a limb, said device being **characterized in that** it comprises:
- means for obtaining a number of limbs or parts of limbs used to carry out said gesture;
- when said number exceeds a first predetermined value, means for selecting a first mode of interaction from among said at least two available modes, said first mode consisting in activating a gesture recognition engine embedded in said digital playback device, so as to enable recognition of customized gestures;
- when said number is smaller than or equal to a second predetermined value, means for selecting a second mode of interaction from among said at least two available modes, said second mode consisting in deactivating a gesture recognition engine embedded in said digital playback device;
- and, when the first mode of interaction is selected:
- means for recognizing a customized gesture carried out by the user;
- means for displaying of a piece of data representing a shape recognized by the gesture recognition engine;
- means for initializing a validation time counter for a predetermined period of time;
- when no action takes place on said digital playback device during said predetermined period of time, means for validating said recognized shape, said means for validating comprising means for performing a command associated with said recognized shape;
- when an action takes place on said digital playback device during said predetermined period of time:
- means for initializing a corrective mechanism;
- means for displaying a list of possible gestures associated with an application currently executing on said digital playback device;
- means for displaying an action to be performed by the gesture recognition engine, in response to the selection, by the user, of a gesture in said list of possible gestures.
